**Europäisches Patentamt**

**European Patent Office**

**Office européen des brevets**

(19)

(11) Veröffentlichungsnummer : **0 375 868 B1**

## (12) EUROPÄISCHE PATENTSCHRIFT

(45) Veröffentlichungstag der Patentschrift :
**19.02.92 Patentblatt 92/08**

(51) Int. Cl.⁵ : **F16L 49/02, F16L 21/00, E03F 3/04, E02D 29/10**

(21) Anmeldenummer : **89119487.0**

(22) Anmeldetag : **20.10.89**

(54) **Rohrverbindung.**

(30) Priorität : **28.12.88 DE 3844045**

(43) Veröffentlichungstag der Anmeldung :
**04.07.90 Patentblatt 90/27**

(45) Bekanntmachung des Hinweises auf die
Patenterteilung :
**19.02.92 Patentblatt 92/08**

(84) Benannte Vertragsstaaten :
**AT BE CH ES FR GB GR IT LI LU NL SE**

(56) Entgegenhaltungen :
**DE-A- 2 242 928**
**DE-A- 2 900 143**
**DE-A- 3 019 623**
**FR-A- 2 572 747**
**GB-A- 2 138 089**
**US-A- 3 912 286**

(73) Patentinhaber : **REHAU AG + Co**
**Rheniumhaus**
**W-8673 Rehau (DE)**

(72) Erfinder : **Der Erfinder hat auf seine Nennung**
**verzichtet**

EP 0 375 868 B1

Jouve, 18, rue Saint-Denis, 75001 PARIS

## Beschreibung

Die Erfindung betrifft eine Rohrverbindung von Vortriebsrohre oder dergleichen mit Verbindungsbereichen an den jeweils freien Enden der Einzelrohre, wobei zur Bildung der Verbindungsbereiche die Rohrwand an wenigstens einem freien Ende spiegelbildlich zum übergreifenden freien Ende des Gegenrohres in Stufen von übereinstimmender Länge und Tiefe zurückversetzt ist.

Dem Sanieren von undichten Flüssigkeitsleitungen wie Abwasserkanälen usw. kommt in jüngstser Zeit mehr und mehr Bedeutung zu. Hierzu wurden verschiedene Sanierungsverfahren entwickelt, wobei der Reparatur verlegter Leitungen mit kurzen Rohrabschnitten - in der Fachsprache "Kurzrohr-Relining" genannt - eine herausragende Bedeutung erlangt hat. Mit diesem Verfahren werden kürzere Rohrabschnitte in die defekten Rohrleitungsstränge ohne Aufgrabungsarbeit über die Kontrollschächte des bestehenden Rohrleitungssystems eingepresst. Da diese Kontrollschächte jedoch nur begrenzte lichte Abmessungen aufweisen, ist auch die mögliche Einbaulänge der einzelnen Rohrabschnitte begrenzt. Es werden deshalb relativ kurze Rohrstücke von ca. einem Meter Länge eingesetzt.

Für das Einziehen oder Einpressen solcher Rohrleitungsstücke in die defekten Rohrleitungsstränge sind in der Vergangenheit unterschiedliche Verfahrenstechniken entwickelt worden. So besteht eine Lösung darin, kurze Rohrstücke einer im Durchmesser kleineren Rohrleitung in eine bestehende Rohrleitung mit größerem Durchmesser einzuschieben. Die daraus resultierende Querschnittsverengung des lichten Leitungsdurchmessers ist jedoch in den meisten Fällen nicht tragbar. Daher werden Verfahren bevorzugt, die den bisherigen lichten Querschnitt der verlegten Rohrleitungsstränge erhalten.

Bei diesen Verfahren wird die defekte Rohrleitung durch eine hydraulisch oder mechanisch gesteuerte Vorrichtung zertrümmert und die Bruchstücke nach außen in den Umgebungsbereich der Rohrleitung gedrückt. Dadurch wird es ermöglicht, in den bei der Zertrümmerung der alten Rohrleitungsstränge entstehenden Tunnel ein jeweils kurzes Rohrstück gleichen Durchmessers nachzuschieben. Hierbei ist es notwendig, daß das eingeschobene Rohr an der Außenseite möglichst glatt ist, da beim Durchpressen bzw. beim Einziehen der kurzen Rohrleitungsstükke über den äußeren Umfang vorstehende Muffenbereiche das Einpressen bzw. Einziehen erschweren bzw. völlig verhindern würden. Ein für dieses Verfarhen geeignetes Rohr ist z.B. aus DE-A-3 019 623 bekannt.

Aus der Fachzeitschrift "Abwassertechnik" Heft 5/1987, Seiten 22-24 sind Rohre für die unterirdisch gesteuerte Bauweise nicht begehbarer Querschnitte - DN 250 bis DN 800 - bekannt, zu denen in dieser Fundstelle einzelne Verbindungsmöglichkeiten beschrieben sind. Die dort dargestellten Verbindungen sind axial auf Druck beanspruchbar. Es handelt sich dabei um aufwendige Verbindungstechniken, die - soweit sie sich auf Rohre aus polymeren Werkstoffen beziehen - unter Verwendung von Zusatzteilen und zusätzlichen Konfektionsarbeiten aufwendig hergestellt werden müssen. Außerdem werden zur Aufnahme der anfallenden Druckbelastungen dicke Wandquerschnitte, insbesondere im Verbindungsbereich vorgeschlagen, die eine wirtschaftliche Herstellungsweise ausschließen.

Hier setzt die Erfindung ein, die es sich zur Aufgabe gestellt hat, eine Rohrverbindung für Kurzrohrstücke anzugeben, die in der Lage ist, die bei der Verlegung insbesondere in den Verbindungsbereichen auftretenden Kräfte aufzunehmen, ohne daß die Gefahr einer Beschädigung der Rohrwand in diesen Bereichen zu befürchten wäre.

Es ist weiterhin Aufgabe der Erfindung, Verformungen des Rohrendes bei der Konfektionierung des Steckbereichs zu verhindern. Erfindungsgemäß wird dazu vorgeschlagen, daß den vom Steckende und vom Muffenende gebildeten Stufen gegenüberliegend ringförmige Stützelemente spiegelbildlich oder gegeneinander versetzt am äußeren bzw. inneren Umfang der Muffe und/oder des Steckendes angeordnet sind.

Rohre aus polymeren Werkstoffen, die nach der Lehre der Erfindung Verwendung finden können, werden in der Regel im Extrusionsverfahren mit Außenkalibrierung hergestellt. Bedingt durch den über die Außenkalibrierung eingeleiteten und durchgeführten Abkühlprozess der Rohre entstehen am inneren Rohrumfang Zugspannungen, die je nach Fertigungsprozess und Rohrwanddicke erhebliche Größenordnungen erreichen können. Die endlos extrudierten und von außen nach innen abgekühlten Rohre werden für den erfindungsgemäßen Einsatz entsprechend abgelängt und danach der Konfektionierung zugeführt. Diese Konfektionierung besteht in einer Bearbeitung der Rohrenden, z.B. in der stufenartigen Zurückversetzung des Querschnitts der Rohrwand an dem einen freien Ende des Rohres, während das andere freie Ende spiegelbildlich zum übergreifenden freien Ende des Gegenrohres in Stufen von übereinstimmender Länge und Tiefe zurückversetzt ist. Diese Konfektionierung erfolgt z.B. durch spanabhebende Bearbeitung. Durch die Querschnittsreduzierungen der freien Rohrenden werden an diesen Stellen die rohrwandstabilisierenden Kräfte weggenommen und die inneren Spannungen der verbleibenden Rohrwandbereiche führen zu Verformungen der jeweils als Muffenende oder Steckende ausgebildeten Rohrenden. Diese Verformungen sind insbesondere bedeutsam bei polymeren Werkstoffen mit niedrigem Elastizitätsmodul, z.B. bei Polyethylen hoher Dichte, bei denen sie

2

EP 0 375 868 B1

Größenordnungen annehmen können, die eine maßgenaue Rohrverbindung ausschließen.

Durch diese Verformungen bedingt, lassen sich die einzelnen Rohrstücke - wenn überhaupt - nur so miteinander verbinden, daß eine dauerhafte Funktion der Dichtheit nicht erreicht werden kann.

Amorphe, polymere Werkstoffe, wie z.B. PVC-U, lassen sich durch Tempern bis nahe unterhalb des VICAT-Erweichungspunktes weitgehend spannungsfrei machen. Hier würden dann allerdings die verbleibenden Restwandquerschnitt in den Verbindungsbereichen allein nicht mehr ausreichen, die bei der Verlegung auftretenden Druck- oder Zugkräfte aufzunehmen.

Der bei PVC mögliche Tempervorgang ist bei den teilkristallinen Werkstoffen wie Polyethylen hoher Dichte, Polypropylen usw. nicht möglich. Bei diesen Werkstoffen müßte man zum Abbau der Spannungen in der Rohrwand das Rohr bis knapp an den Kristallitschmelzbereich erhitzen, was in der Praxis nicht ohne irreparable Verformungen des Rohres bzw. der betreffenden Rohrenden machbar ist.

Nachdem die rohrimmanenten Spannungen nicht oder nur schwer abbaubar sind, können ihre negativen Auswirkungen dadurch reduziert bzw. verhindert werden, daß vor der mechanischen Abarbeitung der Querschnittsbereiche an den Rohrenden gegenüberliegend zu diesen Bereichen an bzw. in den Querschnitt der verbleibenden Rohrwandung die erfindungsgemäßen ringförmigen Stützelemente angeordnet werden. Diese ringförmigen Stützelemente dienen als Wandverstärkung und nehmen die durch die mechanische Bearbeitung freigesetzten Spannungen auf. Darüber hinaus dienen sie bei der Verlegung der Rohrstücke im Vorpress- bzw. im Einzugsverfahren zur Aufnahme der dabei entstehenden Press- bzw. Zugkräfte im Verbindungsbereich zwischen zwei Rohrstücken.

Es hat sich als vorteilhaft erwiesen, daß die ringförmigen Stützelemente wenigstens teilweise vom Rohrwandmaterial halternd umschlossen sind. Wenn die ringförmigen Stützelemente am Außenumfang der Rohrstücke angeordnet sind, kann auf diese Weise trotzdem die Glattflächigkeit der Rohroberfläche erzielt werden. In diesem Falle empfiehlt es sich, den Querschnitt der ringförmigen Stützelemente in die Rohroberfläche einzulassen, so daß die außenliegende Oberfläche der ringförmigen Stützelemente mit der äußeren Oberfläche des Rohrstükkes fluchtet. Die gleiche Anordnung ist zweckmäßig bei den nach innen zum Durchflußquerschnitt der Rohrstücke gerichteten ringförmigen Stützelementen, damit auf das Durchflußgut kein negativer Einfluß ausgeübt wird.

In einer anderen Ausführungsform kann es zweckmäßig sein, daß wenigstens eines der ringförmigen Stützelemente in eine nutenförmige Öffnung am freien Ende der Muffe bzw. des Steckendes eingelassen ist.

Mit der erfindungsgemäßen Rohrverbindung lassen sich Kurzrohrstücke schaffen, die bei der mechanischen Bearbeitung ihrer Steckverbindungsbereiche trotz der den Rohrwandungen innewohnenden Spannungen ihre maßgenauen Abmessungen behalten, so daß zwei spiegelbildlich zueinander versetzte Rohrenden ohne Schwierigkeiten gesteckt werden können. Bei der Verwendung entsprechender Dichtelemente zwischen den spiegelbildlich versetzten Steckbereichen der beiden Rohrstücke kann dadurch eine auf Dauer dichte Rohrverbindung geschaffen werden. Die erfindungsgemäße Rohrverbindung hat darüber hinaus den Vorteil, daß bei der Zug- bzw. Pressverlegung die auftretenden Zug- oder Presskräfte auch über die ringförmigen Stützelemente aufgenommen werden.

Dadurch werden die nach der mechanischen Bearbeitung in den Verbindungsbereichen verbleibende Rohrwandquerschnitte entsprechend entlastet und sind daher weniger bruch- bzw. beschädigungsanfällig.

In der Zeichnung sind Ausführungsbeispiele der neuerungsgemäßen Rohrverbindung schematisch dargestellt; es zeigt:

Fig. 1 eine Rohrverbindung im Teilschnitt mit außen und innen angeordneten Stützelementen.

Fig. 2 eine Rohrverbindung entsprechend Fig. 1 mit zwei umlaufenden Dichtelementen.

Fig. 3 eine Rohrverbindung mit gegeneinander versetzt angeordneten Stützelementen und einem umlaufenden Dichtelement im Bereich des Steckendes sowie einer Rohrverriegelung.

Fig. 4 eine Rohrverbindung entsprechend Fig. 3 mit einem in die Wandung des Steckendes eingesetzten Stützelement.

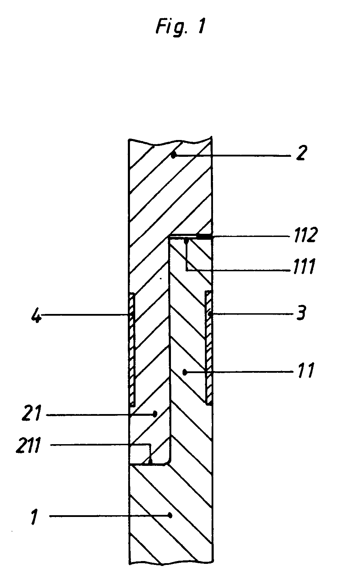

Die in Fig. 1 im Teilschnitt gezeigte Rohrverbindung zeigt die Enden der Rohre 1, 2 im Querschnitt. Das Ende des Rohres 1 ist durch Abarbeitung des Rohrwandquerschnittes auf das Steckende 11 mit annähernd halber Rohrwanddicke reduziert. Spiegelbildlich dazu ist das Ende des Rohres 2 auf das Muffenende 21 gebracht. Steckende und Muffenende haben jeweils annähernd die gleiche Länge und Dicke, so daß sowohl an der äußeren Oberfläche als auch an der inneren Oberfläche ein nahezu glatter Übergang vom Rohr 1 auf das Rohr 2 gewährleistet ist. In der gezeigten Darstellung ist am freien Ende 111 des Steckendes 11 ein Toleranzspalt 112 belassen, der ein relativ grobes Bearbeiten des freien Endes 111 zuläßt.

Gegenüberliegend in den Außenwandungen des Steckendes 11 und des Muffenendes 21 sind die ringförmigen Stützelemente 3, 4 angeordnet. Die ringförmigen Stützelemente 3, 4 sind derart in die Außenwandungen des Steckendes 11 und des Muffenendes 21 eingelassen, daß sie einen glatten Abschluß mit den äußeren Rohrwandbereichen bilden. Auf diese Weise wird verhindert, daß im Bereich der ringförmigen Stüt-

3

zelemente Querschnittsverdickungen nach außen oder innen erfolgen, die beim Einziehen bzw. Durchpressen der Rohre einerseits oder beim Durchfluß von Medien durch die lichte Öffnung der Rohre hinderlich sein könnten.

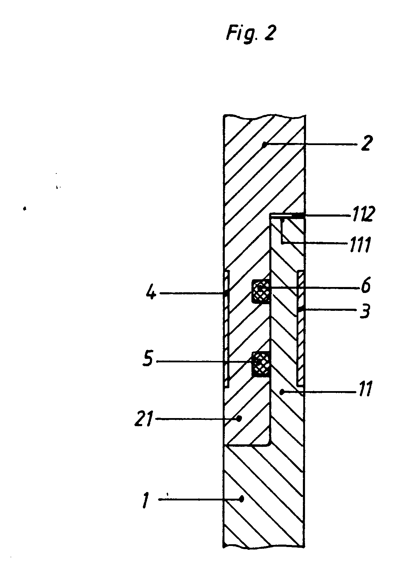

Die in Fig. 2 gezeigte Variante der erfindungsgemäßen Rohrverbindung zeigt gegenüber der Darstellung in Fig. 1 zwei Dichtringe 5, 6, die in die innere Oberfläche des Muffenendes 21 eingelassen sind. Im Bedarfsfall kann auch nur einer dieser Dichtringe 5 ausreichen oder noch weitere Dichtringe am inneren Umfang des Muffenendes 21 angeordnet sein. Gleiche Teile haben in dieser Darstellung die gleichen Bezugszahlen erhalten wie in Fig. 1.

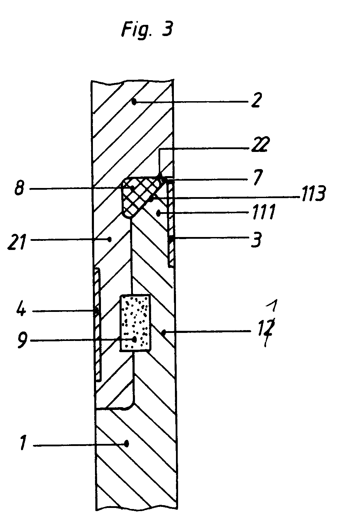

Fig. 3 zeigt die Rohrverbindung mit gegeneinander versetzt angeordneten ringförmigen Stützelementen 3, 4. Das ringförmige Stützelement 3 ist dabei an die Spitze des Steckendes gerückt, welches eine nach innen gerichtete Abschrägung 113 aufweist. In die dadurch zwischen der Abschrägung 113 und dem Anschlag 22 am Rohr 2 gebildete Aufnahmekammer 7 ist ein Dichtring 8 eingesetzt. Die Aufnahmekammer 7 kann sich bis in den Wandquerschnitt des Muffenendes erweitern. Der Dichtring 8 wird durch die Schräge 113 und die Anschlagfläche 22 bei der Herstellung der Steckverbindung zwischen den Enden der Rohre 1, 2 verpresst und bildet somit eine Abdichtung sowohl nach innen als auch nach außen.

Die gezeigte Darstellung hat insofern eine Besonderheit, als hier ein Verriegelungselement 9 im Bereich des Steckendes 12 und des Muffenendes 21 angeordnet ist. Das Verriegelungselement 9 sitzt in einer Aufnahmekammer, welche durch entsprechende Ausnehmungen in den Innenwandungen des Muffenendes und des Steckendes geschaffen wurde. Das Verriegelungselement kann bei der Herstellung der Steckverbindung in diese Aufnahmekammer eingebracht werden und bewirkt die Längskraftschlüssigkeit der hergestellten Steckverbindung. Mit der Verwendung eines solchen Verriegelungselementes 9 können die so verbundenen Einzelrohre 1, 2 in ihren späteren Endsitz eingezogen werden, wobei über das Verriegelungselement 9 die dabei auftretenden Zugkräfte aufgenommen werden.

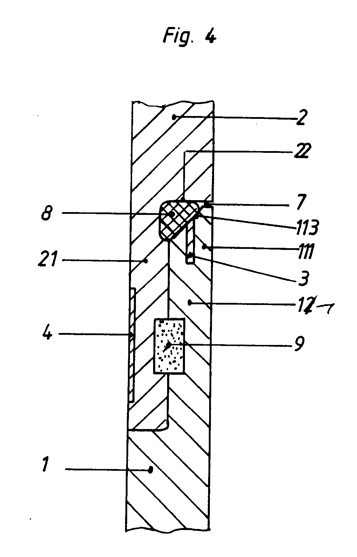

Die in Fig. 4 gezeigte Rohrverbindung entspricht derjenigen in Fig. 3 bis auf die Zurückverlegung des ringförmigen Stützelementes 3 in die Wandung des Steckendes 12. Auf diese Weise wird das ringförmige Stützelement 3 dem Angriff beispielsweise aggressiver Durchflußmedien durch den lichten Querschnitt der Rohre 1, 2 entzogen, da auch der über die Schlitzöffnung zugängliche Querschnittsbereich des ringförmigen Stützelementes 3 durch den im Endsitz verpressten Dichtring 8 gas- und flüssigkeitsdicht abgedichtet ist.

## Patentansprüche

1. Rohrverbindung von Vortriebsrohre oder dergleichen mit Verbindungsbereichen an den jeweils freien Enden der Einzelrohre, wobei zur Bildung der Verbindungsbereiche die Rohrwand an wenigstens einem freien Ende spiegelbildlich zum übergreifenden freien Ende des Gegenrohres in Stufen von übereinstimmender Länge und Tiefe zurückversetzt ist, dadurch gekennzeichnet, daß den vom Steckende (12) und vom Muffenende (21) gebildeten Stufen gegenüberliegend ringförmige Stützelemente (3, 4) spiegelbildlich oder gegeneinander versetzt am äußeren bzw. inneren Umfang des Steckendes (12) und des Muffenendes (21) angeordnet sind.

2. Rohrverbindung nach Anspruch 1, dadurch gekennzeichnet, daß die ringförmigen Stützelemente (3, 4) wenigstens teilweise vom Rohrwandmaterial halternd umschlossen sind.

3. Rohrverbindung nach Anspruch 1, dadurch gekennzeichnet, daß wenigstens eines der ringförmigen Stützelemente (3, 4) in eine nutenförmige Stützöffnung am freien Ende (111, 211) des Steckendes (11) oder des Muffenendes (12) einge- lassen ist.

## Claims

1. Pipe connection from the feed pipe or similar to the connecting points of the respective open ends of the individual pipe, whereby to form the connecting points the pipe wall at at least one open end is staggered backwards in mirror image fashion to the overlapping open end of the mating pipe in stages of corresponding length and depth, thereby characterized, in that the ring-shaped supporting elements (3, 4) opposed to the stages formed by the male end (12) and female end (21) are arranged in mirror image or offset to each other at the outer and inner circumferenve of the male end (12) and female end (21) respectively.

2. Pipe connection according to claim 1, thereby characterized, in that the ring-shaped supporting elements (3, 4) are at least partially enclosed in a retaining manner by the pipe wall material.

3. Pipe connection according to claim 1, thereby characterized, in that at least one of the ring-shaped supporting elements (3, 4) is let into a groove-shaped supporting aperture at the open end (111, 211) of the male end (11) or female end (12).

**Revendications**

1. Assemblage de tuyaux de creusement ou similaires présentant des zones d'assemblage aux extrémités libres des différents tuyaux; pour former les zones d'assemblage, la paroi du tuyau possède, à au moins une des extrémités libres, des paliers en retrait, inversés par rapport à l'extrémité libre du tuyau opposé, de longueur et de profondeur correspondantes; cet assemblage est caractérisé par le fait que des éléments de support annulaires (3, 4), opposés aux paliers formés par l'extrémité à emboîtage (12) et l'extrémité à manchon (21), sont disposés en décalage inverse ou opposé sur la circonférence extérieure ou intérieure de l'extrémité à emboîtage (12) ou à manchon (21).

2. Assemblage de tuyaux selon la revendication 1, caractérisé par le fait que les éléments de support annulaires (3, 4) sont au mois partiellement entourés par le matériau de la paroi du tuyau qui les soutient.

3. Assemblage de tuyaux selon la revendication 1, caractérisé par le fait qu'au moins un des éléments de support annulaire (3, 4) s'encastre dans une ouverture en forme de gorge à l'extrémité libre (111, 211) de l'extrémité à emboîtage (11) ou à manchon (12).

Fig. 1

*Fig. 2*

Fig. 3

Fig. 4